# EUROPÄISCHE PATENTSCHRIFT

(11) **EP 2 722 128 B1**
(45) Veröffentlichungstag und Bekanntmachung des Hinweises auf die Patenterteilung: **18.08.2021**
(21) Anmeldenummer: 13181301.6
(22) Anmeldetag: 22.08.2013
(51) Int. Cl.: F16D 43/02, B24B 23/02, B24B 47/26, F16D 41/10, B25F 5/00, B23B 31/12

(54) **Angetriebene Handwerkzeugmaschine sowie Spindelarretierung hierfür**
Powered hand-held machine tool and spindle lock therefor
Machine-outil manuelle entraînée et dispositif de blocage de la broche correspondant

(30) Priorität: 16.10.2012 DE 102012218833
(43) Veröffentlichungstag der Anmeldung: 23.04.2014
(73) Patentinhaber: Metabowerke GmbH, 72622 Nürtingen (DE)
(72) Erfinder: Van der Beek, Felix Johannes, 52072 Aachen (DE)
(74) Vertreter: Markfort, Iris-Anne Lucie

(56) Entgegenhaltungen:
- DE-B3- 10 338 608
- DE-U1- 20 203 049

## Beschreibung

Die folgende Erfindung betrifft eine angetriebene Handwerkzeugmaschine, insbesondere einen Winkelschleifer, umfassend ein Gehäuse, eine Antriebseinheit, eine antreibbare Spindel, an der ein Werkzeug befestigbar ist, sowie eine Spindelarretierung.

Bei angetriebenen Handwerkzeugmaschinen, insbesondere bei Winkelschleifern oder Winkelschleifmaschinen, ist in der Regel eine manuell zu betätigende Arretiereinrichtung (Spindel-Stopp) am Getriebegehäuse vorgesehen. Durch Drücken und Halten eines entsprechenden Druckschalters wird sichergestellt, dass sich die Spindel bei der Montage oder Demontage eines an der Spindel befestigbaren Werkzeugs nicht mitdreht. Dies wird in der Regel dadurch erreicht, dass beim Betätigen der Arretiereinrichtung ein Bolzen in eine Vertiefung eines Abtriebs-Zahnrades (das drehfest mit der Spindel verbunden ist) oder in eine Ausnehmung an der Spindel selbst eingreift und auf diese Weise die Spindel gegen ein Verdrehen sichert. Manuelle Arretiervorrichtungen für angetriebene Handwerkzeugmaschinen sind beispielsweise aus der US 3,802,518 bekannt.

Des Weiteren sind im Zusammenhang mit Bohrmaschinen, Schlagbohrmaschinen, Bohrhämmern oder Schraubern auch automatische Arretiervorrichtungen bekannt. Diese Arretiervorrichtungen sperren die Spindel selbsttätig bei einer Drehmomentübertragung von der Spindel in Richtung zum Antrieb.

Bei einer Drehmomentübertragung vom Antrieb auf die Spindel hingegen wird die Spindel selbsttägig wieder frei gegeben.

Ein solcher Aufbau ist beispielsweise aus der Patentschrift DE 103 38 608 B3 bekannt, bei der die Arretiervorrichtung einen motorseitigen Antriebsteil, einen spindelseitigen Abtriebsteil, welcher drehfest mit der Spindel verbunden ist, und wenigstens einen Klemmkörper aufweist. Der Klemmkörper ist einem Raum aufgenommen, der radial innen von Abtriebsteil, radial außen von einem gehäusefesten Bauteil, das eine im Wesentlichen zylindrische Öffnung bildet, und in Umfangsrichtung beidseitig von axial in die Öffnung ragende Fortsätzen des Antriebsteil begrenzt wird. Die jeweiligen Fortsätze weisen außenseitig eine Anschlagfläche auf, die bei Antrieb des Antriebsteils auf den in Drehrichtung folgenden Klemmkörper drückt. Hierdurch wird der Klemmkörper stets in einem Bereich zwischen dem Antriebsteil und dem gehäusefesten Bauteil gehalten, in dem er die Drehung von Antriebsteil und Abtriebsteil gegenüber dem gehäusefesten Bauteil nicht behindert. Aufgrund einer Abflachung der Außenkontur des Abtriebsteils ist der jeweilige Klemmkörper, wenn er in Kontakt mit der Anschlagfläche eines Fortsatzes ist, frei, also außer Klemmlage. Wenn ein Anwender im nicht angetriebenen Zustand der Handwerkzeugmaschine (auch beispielsweise bei einem Werkzeugwechsel) ein Drehmoment in die Spindel einleitet, so wird das Abtriebsteil in dieser Richtung gegenüber dem gehäusefesten Bauteil um einige Winkelgrade verdreht, wodurch der wenigstens eine Klemmkörper in den sich keilförmig verjüngenden Spalt zwischen der Abflachung und der zylindrischen Innenwandung des Raums verlagert wird. Dies führt zu einer Festsetzung des mit der Spindel drehfest verbundenen Antriebsteils gegenüber dem gehäusefesten Bauteil.

Eine vergleichbare Anordnung ist ebenfalls aus der internationalen Anmeldung WO 2007/087909 A1 bekannt, bei der der Antrieb über eine Mitnehmerscheibe und der Abtrieb über eine Klemmscheibe erfolgt. Zwischen einer gehäusefesten Umfangswand des Getriebegehäuses und der Klemmscheibe ist ferner ein Klemmspalt mit darin aufgenommenen Klemmrollen ausgebildet. Die Mitnehmerscheibe greift über Vorsprünge in entsprechende Ausnehmungen der Klemmscheibe ein, wobei die Drehmomentübertragung von der Mitnehmerscheibe über die Klemmscheibe auf die Spindel erfolgt. Wird eine Drehbewegung von der Spindel über die Klemmscheibe (relativ zu der Mitnehmerscheibe und dem Antrieb) in die Anordnung eingeleitet, so werden auch bei dieser Anordnung die Klemmrollen relativ zu der Klemmscheibe in einen Abschnitt verlagert, in dem der Klemmspalt enger ausgebildet ist, sodass die Klemmrollen die Klemmscheibe relativ zu dem gehäusefesten Außenumfang verklemmen.

Beiden aus dem Stand der Technik bekannten Lösungen ist gemein, dass die umschließende Außenfläche des Klemmspalts durch ein feststehendes Gehäuseteil gebildet wird. Dieses ist unkritisch bei vergleichsweise geringen Drehzahlbereichen, die beispielsweise bei einem Akkuschrauber bei etwa 1.300 Umdrehungen pro Minute liegen.

Die aus dem Stand der Technik bekannte Spindelarretierung benötigt funktionsbedingt eine Reibungskraft als Schaltimpuls, um von dem Leerlauf (in dem eine Drehmomentübertragung auf die Spindel folgen kann) in den Sperrbetrieb (in dem eine Drehbewegung der Spindel durch die Klemmung unterbunden wird) überzugehen. Dabei stehen die Klemmrollen im ständigen Kontakt mit der gehäusefesten Außenfläche des Klemmspalts, wodurch eine unerwünschte Reibung innerhalb des Systems auftritt, die als Verlustleistung in Form von Erwärmung vorliegt. Dies bringt bekannte Probleme mit sich. So haben Versuche an einem Geradschleifer, bei dem Drehzahlen von bis zu 30.000 Umdrehungen pro Minute erreicht werden, gezeigt, dass bei einem deutlich höheren Drehzahlniveau die Reibungskraft so viel Wärme erzeugt, dass der Einsatz nicht möglich ist. Durch die starke Erwärmung wird der Antrieb geschädigt, sodass eine Handwerkzeugmaschine mit einer solchen Spindelarretierung nur eine sehr geringe Lebensdauer hat. Ferner erwärmt sich auch das Gehäuse nennenswert, sodass die Handhabung für einen Anwender deutlich erschwert wird. Des Weiteren kann bei einer solchen ständigen Reibung und damit einer vergleichsweise hohen Verlustleistung nur ein geringer Teil der verfügbaren Leistung der Handwerkzeugmaschine abgerufen werden. Der Wirkungsgrad ist folglich eher schlecht. Gleichzeitig steht der Nutzen einer solchen automatischen Spindelarretierung nur in den wenigen Momenten des Werkzeugwechsels zur Verfügung.

Ein weiterer Nachteil, der sich in der Praxis bei den aus dem Stand der Technik bekannten Lösungen gezeigt hat, ist darin zu sehen, dass sich die Klemmrollen im Leerlauf undefiniert bei Drehmomentspitzen des übertragenen Antriebsdrehmoments innerhalb des Klemmspalts bewegen, wofür die auf den Klemmkörper einwirkende Fliehkraft bzw. Zentrifugalkraft verantwortlich zu machen ist.

Schließlich sei der Vollständigkeit halber auch die DE 202 03 049 U1 genannt, die für die vorliegende Erfindung technologischen Hintergrund darstellt.

Demgegenüber besteht eine Aufgabe der vorliegenden Erfindung darin, die vorstehend genannten Nachteile zu reduzieren und eine automatische Spindelarretierung bereitzustellen, die auch bei hohen Drehzahlen in einer angetriebenen Handwerkzeugmaschine Verwendung finden kann, ohne deren Lebensdauer deutlich zu beeinträchtigen.

Zur Lösung der vorstehend genannten Aufgabe schlägt die Erfindung eine Handwerkzeugmaschine mit den Merkmalen des Anspruchs 1 vor.

Demgemäß wird eine angetriebene Handwerkzeugmaschine vorgeschlagen, die ein Gehäuse, eine Antriebseinheit, eine antreibbare Spindel, an der ein Werkzeug befestigbar ist, sowie eine Spindelarretierung umfasst. Im Hinblick auf die vorgesehene Spindelarretierung handelt es sich bei der angetriebenen Handwerkzeugmaschine insbesondere um eine Handwerkzeugmaschine, die auch mit hohen Drehzahlen angetrieben werden kann, wie beispielsweise ein Winkelschleifer oder ein Geradschleifer. Die Spindelarretierung weist eine Mitnehmeranordnung auf, die ein Antriebsdrehmoment der Antriebseinheit auf die Spindel zu übertragen vermag, indem diese in Eingriff mit einem drehfest mit der Spindel verbundenen Abtriebsteil bringbar ist. Weiterhin umfasst die Spindelarretierung eine gehäusefeste Stützanordnung und wenigstens ein Klemmmittel, wobei das wenigstens eine Klemmmittel in einem Klemmraum aufgenommen ist, der radial außen durch das Abtriebsteil und radial innen durch die Stützanordnung sowie in Umfangsrichtung beidseitig durch die Mitnehmeranordnung begrenzt ist. Das wenigstens eine Klemmmittel ist innerhalb des Klemmraums angeordnet und kann darin durch eine relative Verdrehung der Spindel zu der Mitnehmeranordnung verlagert werden, um das Abtriebsteil gegen die Stützanordnung zu verklemmen.

Damit eine Verklemmung des Abtriebsteils gegen die Stützanordnung mit Hilfe des wenigstens einen Klemmmittels erreicht werden kann, muss der Klemmraum zumindest in einem Bereich derart dimensioniert sein, dass der Abstand zwischen der radial inneren und der radial äußeren Begrenzung geringer ist als der Durchmesser oder die korrespondierende Erstreckung des Klemmmittels. Auf diese Weise kann das Klemmmittel wie auch aus dem Stand der Technik bekannt, in dem Klemmraum verklemmt werden und eine Relativbewegung der diesen begrenzenden Elemente unterbinden. Um zudem einen Leerlauf zu ermöglichen, in dem die Spindelarretierung eine Drehbewegung der Spindel zulässt, ist der Klemmraum in einem anderen Bereich jedoch zumindest so zu bemessen, dass das Klemmmittel ohne verklemmende Wirkung in diesem aufgenommen sein kann.

Dadurch, dass der Klemmraum bei der vorliegenden Erfindung radial außen durch ein sich drehendes Element, nämlich das Abtriebsteil begrenzt ist, während die gehäusefeste Stützanordnung den Klemmraum radial innen begrenzt, kann der unerwünschte Reibungseffekt zwischen dem Klemmmittel und der Begrenzung des Klemmraums verringert werden. So wird das Klemmmittel infolge der hierauf einwirkenden Zentrifugalkraft bei einer Drehbewegung der Antriebseinheit und der angetriebenen Spindel nach radial außen gedrängt und verbleibt in Kontakt mit dem sich mitdrehenden Abtriebsteil. Somit vollziehen im Leerlauf der Spindelarretierung (wenn das Klemmmittel nicht zum Verklemmen genutzt wird, sondern eine Drehbewegung der Spindel erlaubt) das Klemmmittel und das Abtriebsteil keine Relativbewegung zueinander. Gleichzeitig kann der Klemmraum derart ausgebildet sein, dass dann, wenn das Klemmmittel nach radial außen gedrängt ist, dieses nicht mehr mit der den Klemmraum radial innen begrenzenden Umfangswand der gehäusefesten Stützanordnung in Kontakt steht. Auf diese Weise können unerwünschte Reibungsverluste, wie sie aus dem Stand der Technik, insbesondere bei hohen Drehzahlbereichen, bekannt sind, einfach vermieden werden.

Erfindungsgemäß soll wenigstens ein Klemmmittel vorgesehen sein, wobei sich in der Praxis auch eine Anzahl von zwei, drei oder mehr Klemmmitteln als sinnvoll erwiesen hat.

Erfindungsgemäß ist weiterhin vorgesehen, dass das Abtriebsteil einen Außenstern umfasst, der in einem Querschnitt betrachtet wenigstens eine keilförmige Vertiefung an seinem Innenumfang aufweist, in der das wenigstens eine Klemmmittel zumindest teilweise aufgenommen sein kann, sodass das Klemmmittel in dieser Stellung keinen Kontakt mit der den Klemmraum radial innen begrenzenden Außenumfangsfläche der Stützanordnung aufweist.

Diese Ausführungsform ermöglicht neben einem nahezu reibungsfreien Leerlauf der Anordnung auch eine definierte Positionierung des Klemmmittels im Leerlauf. So wird dieses von der Zentrifugalkraft automatisch in die keilförmige Vertiefung gedrängt und verbleibt in dieser Stellung, solange das Abtriebsteil durch die Antriebseinheit angetrieben wird.

In der vorliegenden Beschreibung wird unter einem Querschnitt eine solche Schnittansicht verstanden, die senkrecht zu der Drehachse der Spindel verläuft.

Bei einer Ausführungsform mit mehreren Klemmmitteln kann jedem Klemmmittel eine keilförmige Vertiefung an dem Innenumfang des Außensterns zugeordnet sein.

Bei einer Weiterbildung der Erfindung kann die keilförmige Vertiefung im Querschnitt betrachtet zwei Keilseiten umfassen, die von ihrem Verbindungspunkt ausgehend in Richtung zu der Stützanordnung geneigt sind. Hindurch wird ein sich in beide Umlaufrichtungen verjüngender bzw. verkleinernder Klemmspalt bereitgestellt, der eine Aktivierung der Spindelarretierung für beide Drehrichtungen ermöglicht. Somit wird die Spindelarretierung nicht nur bei einer Drehbewegung in eine erste Drehrichtung (zum Beispiel beim Lösen eines Spannfutters), sondern auch in einer hierzu entgegengesetzten zweiten Drehrichtung (beispielsweise beim Schließen des Spannfutters) sichergestellt.

Dabei kann der Klemmspalt bezüglich einer Mittelebene spiegelsymmetrisch sein. Alternativ kann jedoch auch eine der Keilseiten kürzer und die andere der Keilseiten länger ausgebildet sein und/oder die Neigung der Keilseiten kann unterschiedlich groß sein, sodass die Klemmung des Klemmmittels in beispielsweise einer ersten Drehrichtung schneller bzw. infolge einer Drehbewegung mit weniger Winkelgraden als in der zweiten hierzu entgegengesetzten Drehrichtung erfolgt.

Weiterhin kann die Mitnehmeranordnung wenigstens ein sich axial erstreckendes Mitnehmerelement zum Eingriff in eine radiale Ausnehmung an dem Abtriebsteil aufweisen. Grundsätzlich ist jedoch auch eine umgekehrte Anordnung denkbar, bei der an dem Mitnehmerelement eine radiale Ausnehmung vorgesehen ist und das Abtriebsteil ein sich axial erstreckendes Eingriffselement aufweist. Wie auch bezüglich des wenigstens einen Klemmmittels reicht es aus, ein sich axial erstreckendes Mitnehmerelement vorzusehen, jedoch hat es sich auch hier in der Praxis als vorteilhaft erwiesen, mehrere in Umfangsrichtung verteilte Mitnehmerelemente, beispielsweise zwei, drei oder vier Mitnehmerelemente, vorzusehen, die sich im Wesentlichen parallel zueinander entlang der Drehachse der Spindel erstrecken können.

Bei einer Weiterbildung der Erfindung kann das wenigstens eine Mitnehmerelement im Querschnitt betrachtet eine erste Anlageschulter umfassen, die durch Anlage an einer korrespondierenden Anlageschulter an der radialen Ausnehmung das Antriebsdrehmoment auf das Abtriebsteil zu übertragen vermag, wobei sich von dieser ersten Anlageschulter in Umfangsrichtung ein Finger erstreckt, der den Klemmraum von einer Seite begrenzt. Grundsätzlich ist es ebenfalls denkbar, einen solchen Finger vorzusehen, der sich nicht von der ersten Anlageschulter, sondern einem anderen Element oder einer anderen Fläche des Mitnehmerelements erstreckt. Der Finger stellt ein optionales Merkmal dar, das ein besonders einfaches Lösen der Verklemmung der Spindelarretierung ermöglicht. So dient dieser dazu, den Klemmkörper aus seiner verklemmten Stellung in eine neutrale Stellung zurückzuführen, sobald die Spindelarretierung automatisch durch Übertragung eines Drehmoments von der Antriebseinheit auf die Spindel gelöst werden soll.

Es kann ferner vorgesehen sein, dass die radiale Ausnehmung zur Aufnahme des Mitnehmerelements in Umfangsrichtung größer ist als die Erstreckung des Mitnahmebereichs des Mitnehmerelements in Umfangsrichtung. Durch Vorsehen eines in Umfangsrichtung bestehenden Spiels wird eine relative Verdrehung des Mitnehmerelements zu dem Abtriebsteil ermöglicht, die wiederum zum Verklemmen der Klemmkörper benutzt werden kann. Der Mitnahmebereich eines Mitnehmerelements ist als der Bereich definiert, der zur Mitnahme des Abtriebsteils genutzt wird, d.h. beispielsweise der durch die zwei seitlichen Anlageschultern des Mitnehmerelements begrenzte Bereich.

Unabhängig von der konkreten Gestaltung des Abtriebsteils oder der Mitnehmeranordnung kann das Klemmmittel einen zylinderförmigen Klemmkörper aufweisen. Dieser kann insbesondere im Querschnitt betrachtet kreisförmig sein.

Weiterhin kann die Stützanordnung einen zentral angeordneten Stützzapfen umfassen.

Es kann ferner vorgesehen sein, dass die Spindel ein Spannfutter zur Befestigung des Werkzeugs umfasst, das durch Drehen in eine erste Drehrichtung geöffnet und durch Drehen in eine entgegengesetzte zweite Drehrichtung geschlossen werden kann, wobei die erste Drehrichtung entgegengesetzt zur Drehrichtung des Antriebsdrehmoments ist.

Schließlich betrifft die vorliegende Erfindung auch eine Spindelarretierung zur Arretierung einer angetriebenen Spindel einer Handwerkzeugmaschine, insbesondere eines Winkelschleifers, mit den vorstehend genannten Merkmalen.

Die Figuren zeigen ein Ausführungsbeispiel der vorliegenden Erfindung, bei dem mehrere Merkmale der Erfindung miteinander kombiniert sind. Der Fachmann wird diese jedoch auch für sich betrachten und gegebenenfalls zu weiteren sinnvollen Kombinationen zusammenführen können.

Die Figuren zeigen schematisch:
- Figur 1:: eine isometrische Ansicht eines Teils einer erfindungsgemäßen Handwerkzeugmaschine mit einer automatischen Spindelarretierung in teilweiser freigeschnittener Ansicht;
- Figur 2:: einen schematischen Querschnitt durch eine erfindungsgemäße Spindelarretierung;
- Figuren 3A-3C:: eine schematische Detailansicht der Spindelarretierung der Figur 2 in unterschiedlichen Betriebszuständen.

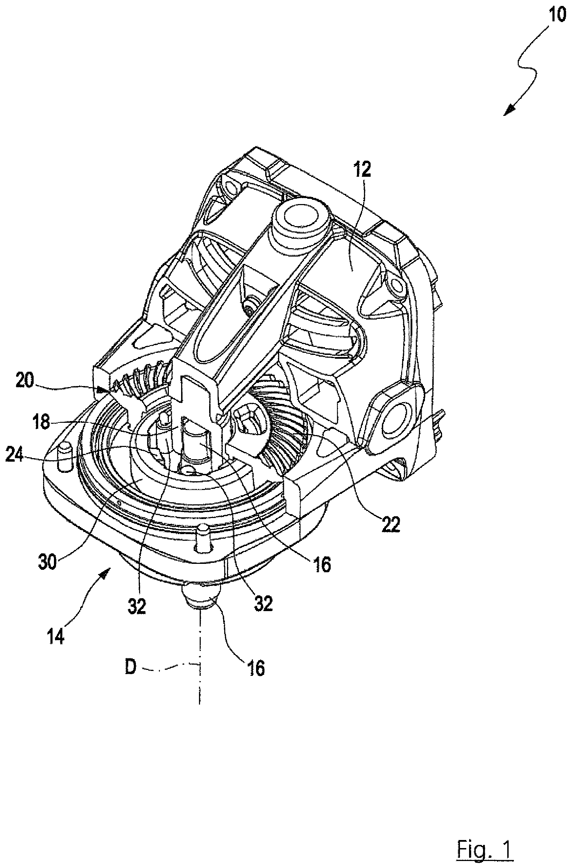

In der Figur 1 ist ein Teil einer erfindungsgemäßen Handwerkzeugmaschine dargestellt und allgemein mit dem Bezugszeichen 10 gekennzeichnet. Auf die Darstellung weiterer Teile der Handwerkzeugmaschine, wie beispielsweise des Griffs und des zugehörigen Griffgehäuses, wurde zur Vereinfachung der Darstellung verzichtet.

Die erfindungsgemäße Handwerkzeugmaschine 10 umfasst ein Getriebegehäuse 12, eine automatische Spindelarretierung 14 sowie eine antreibbare Spindel 16, die von einer nicht dargestellten Antriebseinheit der Handwerkzeugmaschine 10 angetrieben werden kann und sich um eine Drehachse D dreht. Koaxial zu der Drehachse D der Spindel 16 erstreckt sich ferner im Bereich der Spindelarretierung 14 ein gehäusefester Stützzapfen 18.

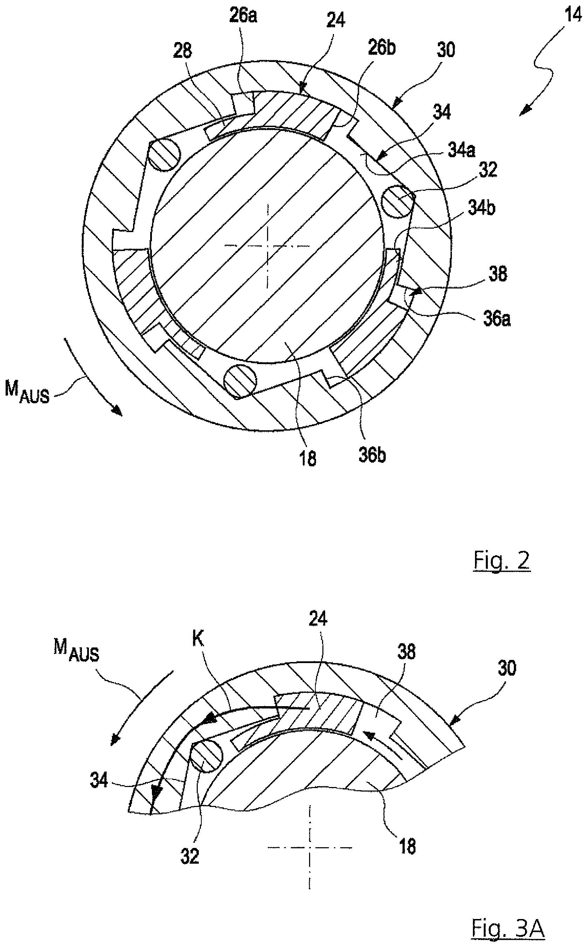

Die Antriebseinheit überträgt im vorliegenden Beispiel mit Hilfe eines Winkelgetriebes (von dem nur das Tellerrad 20 gezeigt ist) ein Antriebsdrehmoment M_{Ein} auf ein als Außenstern 30 ausgebildetes Abtriebsteil, welches wiederum drehfest mit der Spindel 16 verbunden ist. An dem Tellerrad 20 erkennt man in der Figur 1 deutlich die Zahneingriffskontur 22, die eine Drehmomentübertragung über das Winkelgetriebe ermöglicht. Das Tellerrad 20 weist ferner eine Mitnehmeranordnung mit Mitnehmerelementen 24 auf, die sich in die Spindelarretierung 14 axial hinein erstrecken. Diese sind insbesondere in den Figur 2 und 3A-C zu erkennen, welche einen Querschnitt durch die Spindelarretierung 14 zeigen.

Die Mitnehmerelemente 24 umfassen in Umlaufrichtung zwei seitliche Anlageschultern 26a und 26b. Von der ersten Anlageschulter 26a erstreckt sich ferner in Umfangsrichtung ein Finger 28.

Wie in der Figur 2 ebenfalls erkennbar ist, ist der Außenstern 30 mit einer konturierten Innenumfangsfläche versehen. Diese weist mehrere radiale Ausnehmungen 38 auf, die seitlich ebenfalls durch Anlageschultern 36a und 36b begrenzt werden. Die radialen Ausnehmungen 38 sind dabei in ihrer Erstreckung in Umfangsrichtung größer dimensioniert als der jeweilige Mitnehmerabschnitt des Mitnehmerelements 24, d. h. der Abschnitt des Mitnehmerelements 24 zwischen der ersten Anlagenschulter 26a und der zweiten Anlagenschulter 26b. Auf diese Weise ist zwischen dem jeweiligen Mitnehmerelement 24 und der Ausnehmung 38 ein Spiel in Umfangsrichtung vorgesehen, so dass eine geringfügige Relativbewegung des Mitnehmerelements 24 zu dem Außenstern 30 möglich ist.

Liegen die Mitnehmerelemente 24 mit einer ihrer Anlageschultern an der korrespondierenden Anlageschulter des Außensterns 30 an, so wird ein Drehmoment von dem Mitnehmerelement 24 auf den Außenstern 30 übertragen. Dieser ist wiederum drehfest mit der Spindel 16 verbunden, so dass die Spindel 16 sich entsprechend mit einem mit dem Antriebsdrehmoment M_{Ein} korrespondierenden Abtriebsdrehmoment M_{Aus} drehen kann.

Weiterhin umfasst der Außenstern 30 drei keilförmige Vertiefungen 34 an seinem Innenumfang, die jeweils durch zwei Keilseiten 34a und 34b gebildet werden, welche von ihrem Verbindungspunkt ausgehend in Richtung zu dem Stützzapfen 18 geneigt sind.

Der Außenstern 30 begrenzt von radial außen einen Klemmraum, der seinerseits von radial innen durch den Stützzapfen 18 begrenzt ist. Seitlich definieren die Mitnehmerelemente 24 die Erstreckung des Klemmraums in Umfangsrichtung. Innerhalb eines jeden Klemmraums ist ein Klemmkörper 32 verlagerbar aufgenommen.

Wie in den Figuren erkennbar ist, handelt es sich dabei um zylinderförmige Klemmrollen, die in einer Leerlaufstellung (in der die Spindelarretierung 14 keine arretierende Funktion übernimmt) im Bereich der keilförmigen Vertiefung 34 an dem Außenstern 30 anliegen. Diese Stellung wird immer dann von den Klemmrollen 32 eingenommen, wenn die Spindelarretierung 14 gelöst ist und ferner die Spindel 16 angetrieben ist. Infolge des Antriebs der Spindel 16, des Außensterns 30 und der Mitnehmerelemente 24 wirkt nämlich eine Zentrifugalkraft auf die Klemmkörper 32 und zieht diese nach radial außen, so dass die Klemmkörper unweigerlich in die Vertiefung 34 gedrückt werden. Entfällt wiederum diese Zentrifugalkraft (beispielsweise bei einer stehenden Antriebseinheit), so kann bereits eine geringfügige Verlagerung der Klemmkörper 32 innerhalb des Klemmraums erfolgen. In dieser Position der Klemmkörper 32 ist denkbar, dass die Klemmkörper sowohl mit dem Außenstern 30 als auch mit dem zentral angeordneten Stützzapfen 18 in Kontakt stehen.

Wird nun von der Spindel 16 über den Außenstern 30 ein Drehmoment (beispielsweise beim Lösen eines Werkzeugs von der Spindel) in die Arretierung 14 eingeleitet, so hat dies eine relative Verdrehung des Außensterns 30 zu den Klemmrollen 32 und zu dem Stützzapfen 18 zur Folge. Dementsprechend wird der jeweilige Klemmkörper in einen Bereich des Klemmraums verlagert, der sich zunehmend verjüngt, wodurch ein Verklemmen der Klemmkörper 32 zwischen dem Außenstern 30 und dem Stützzapfen 18 bewirkt wird.

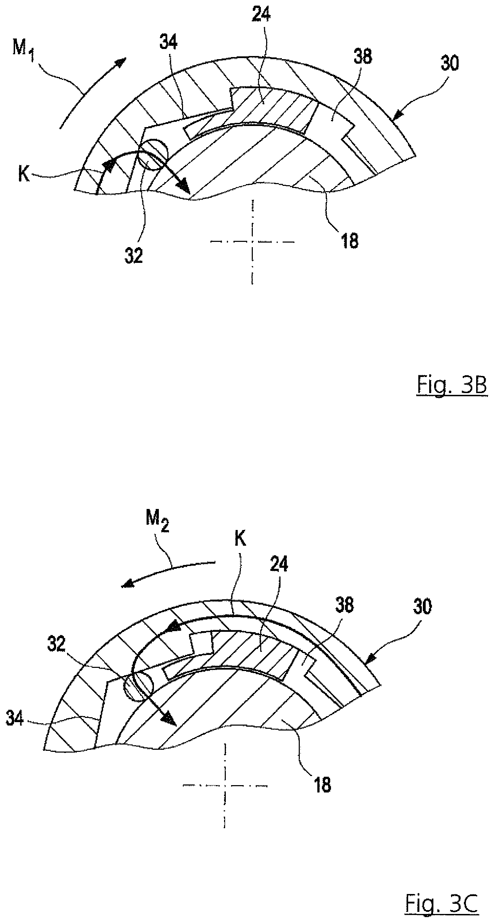

Soll nach erfolgtem Werkzeugwechsel die Spindelarretierung 14 wiederum gelöst werden, so reicht es, dass ein Drehmoment von den Mitnehmerelementen 24 über die erste Anlageschulter 26a in Anlage an die korrespondierende Anlageschulter 36a des Außensterns 30 übertragen wird, wobei der Außenstern 30 hierdurch wieder zurückgestellt wird. Zusätzlich dienen die Finger 28 der Mitnehmerelemente 24 dazu, die Klemmkörper 32 aus einer klemmenden Position in eine Freigabeposition zurückzustellen (vgl. beispielsweise Figur 3c).

Bei der dargestellten Ausführungsform ist besonders vorteilhaft, dass die automatische Spindelarretierung in beide Drehrichtungen aktiviert werden kann. Weiterhin kann an der Spindel 16 ein solches Spannfutter (nicht dargestellt) zur Befestigung eines Werkzeugs vorgesehen sein, dass in eine erste Drehrichtung gelöst und in eine zweite Drehrichtung gesperrt bzw. geschlossen werden kann, wobei die zweite Drehrichtung mit der Drehrichtung des Antriebsdrehmoments M_{Ein} zusammenfällt. Bei dieser Gestaltung ist sichergestellt, dass die Klemmkörper 32 nach dem erneuten Schließen des Spannfutters immer in einer solchen Position relativ zu dem Außenstern 30 stehen (Klemmstellung der Figur 3C), dass die Finger 28 Mitnehmerelemente 24 die Klemmmittel 32 ohne Weiteres wieder zurückstellen können. Alternativ ist es jedoch ebenso denkbar an der ersten wie auch der zweiten Anlageschulter 26a und 26b der Mitnehmerelemente 24 entsprechende Finger 28 auszubilden.

In den Figuren 3A bis 3C ist ferner nochmals detailliert gezeigt, in welchen Positionen das Klemmmittel 32 relativ zu dem Außenstern 30 positioniert sein kann. Die Figur 3A zeigt dabei eine Lösestellung, bei der Spindelarretierung 14 nicht zur Arretierung der Spindel 16 dient, sondern deren Drehbewegung freigibt. Dementsprechend liegen die Mitnehmerelemente 24 mit ihrer ersten Anlageschulter 26a an der korrespondierenden Anlageschulter 36a des Außensterns an und übertragen das Antriebsdrehmoment M_{Ein} auf den Außenstern 30. Der Kraftfluss (angedeutet durch die Kraftflusslinie K)erfolgt bei dieser Position der Klemmkörper 32 ausschließlich von dem Mitnehmerelement 24 auf den Außenstern 30.

Die Figur 3B zeigt indes eine erste Klemmstellung, in der der Außenstern 30 entgegengesetzt verdreht wird. Dabei wird ausgehend von der Spindel 16 ein Drehmoment (beispielsweise beim Werkzeugwechsel) M₁ eingeleitet. Hierdurch wird das Klemmmittel 32 zwischen dem Stützzapfen 18 und dem Außenstern 30 verklemmt, sodass der Kraftfluss K nun von dem Außenstern über das Klemmmittel 32 in den Stützzapfen 18 erfolgt. Der Stützzapfen 18 ist gehäusefest, sodass eine weitere Verdrehung durch die Klemmwirkung des Klemmmittels 32 unterbunden wird.

Derselbe Effekt stellt sich ebenfalls bei einem in die Spindel 16 eingeleiteten Drehmoment M₂ in die entgegengesetzte Richtung ein (vgl. auch Figur 3C).
Dadurch dass der gehäusefeste Stützzapfen 18 im Zentrum der Spindelarretierung 14 angeordnet ist und radial innen den Klemmraum der Klemmmittel 32 begrenzt, kann die Zentrifugalkraft bei angetriebener Spindel dazu genutzt werden, eine stabile Gleichgewichtslage der Klemmmittel zu erreichen und damit bereits eine verringerte Reibung. Zusätzlich kann bei einer entsprechenden Gestaltung des Klemmraums mit Hilfe der Zentrifugalkraft sichergestellt werden, dass das Klemmmittel bei der Leerlaufstellung der Spindelarretierung keinen Kontakt mehr mit dem gehäusefesten Stützzapfen 18 hat und somit ein nahezu reibungsfreier Betrieb im Bereich der Spindelarretierung 14 bereitgestellt werden. Auf diese Weise wird eine automatische Spindelarretierung ermöglicht, die auch bei schnelldrehenden Handwerkzeugmaschinen, wie Winkelschleifern oder Geradschleifern, zum Einsatz kommen kann, ohne sich die damit aus dem Stand der Technik bekannten Nachteile einzukaufen.

## Patentansprüche

1. Angetriebene Handwerkzeugmaschine (10), insbesondere Winkelschleifer, umfassend ein Gehäuse (12), eine Antriebseinheit, eine antreibbare Spindel (16), an der ein Werkzeug befestigbar ist, sowie eine Spindelarretierung (14), wobei die Spindelarretierung (14) aufweist:
eine Mitnehmeranordnung, die ein Antriebsdrehmoment (M_{Ein}) der Antriebseinheit auf die Spindel (16) zu übertragen vermag, indem diese in Eingriff mit einem drehfest mit der Spindel (16) verbundenen Abtriebsteil bringbar ist,
eine gehäusefeste Stützanordnung, und
wenigstens ein Klemmmittel (32),
wobei das wenigstens eine Klemmmittel (32) in einem Klemmraum aufgenommen ist, der radial außen durch das Abtriebsteil und radial innen durch die Stützanordnung sowie in Umfangsrichtung beidseitig durch die Mitnehmeranordnung begrenzt ist und in dem das wenigstens eine Klemmmittel (32) angeordnet ist, **dadurch gekennzeichnet, dass** das wenigstens eine Klemmmittel (32) innerhalb des Klemmraums durch eine relative Verdrehung der Spindel (16) zu der Mitnehmeranordnung verlagert werden kann, um das Abtriebsteil gegen die Stützanordnung zu verklemmen, und
dass
das Abtriebsteil einen Außenstern (30) umfasst, der in einem Querschnitt betrachtet wenigstens eine keilförmige Vertiefung (34) an seinem Innenumfang aufweist, in der das wenigstens eine Klemmmittel (32) zumindest teilweise aufgenommen sein kann, so dass das Klemmmittel (32) in dieser Stellung keinen Kontakt mit der den Klemmraum radial innen begrenzenden Außenumfangsfläche der Stützanordnung aufweist.

2. Handwerkzeugmaschine (10) nach Anspruch 1,
wobei die keilförmige Vertiefung (34) im Querschnitt betrachtet zwei Keilseiten (34a, 34b) umfasst, die von ihrem Verbindungspunkt ausgehend in Richtung zu der Stützanordnung geneigt sind.

3. Handwerkzeugmaschine (10) nach einem der Ansprüche 1 oder 2,
wobei die Mitnehmeranordnung wenigstens ein sich axial erstreckendes Mitnehmerelement (24) zum Eingriff in eine radiale Ausnehmung (36) an dem Abtriebsteil aufweist.

4. Handwerkzeugmaschine (10) nach Anspruch 3,
wobei das wenigstens eine Mitnehmerelement (24) im Querschnitt betrachtet eine erste Anlageschulter (26a) umfasst, die durch Anlage an eine korrespondierende Anlageschulter (36a) an der radialen Ausnehmung (36) das Antriebsdrehmoment (M_{Ein}) auf das Abtriebsteil zu übertragen vermag, und wobei sich von dieser ersten Anlageschulter (26a) in Umfangsrichtung ein Finger (28) erstreckt, der den Klemmraum von einer Seite begrenzt.

5. Handwerkzeugmaschine (10) nach Anspruch 3 oder 4,
wobei die radiale Ausnehmung (36) in Umfangsrichtung größer ist als die Erstreckung eines Mitnahmebereichs des Mitnehmerelements (24) in Umfangsrichtung.

6. Handwerkzeugmaschine (10) nach einem der vorhergehenden Ansprüche,
wobei das Klemmmittel (24) einen zylinderförmigen Klemmkörper aufweist, der insbesondere im Querschnitt betrachtet kreisförmig ist.

7. Handwerkzeugmaschine (10) nach einem der vorhergehenden Ansprüche,
wobei die Stützanordnung einen zentral angeordneten Stützzapfen (18) umfasst.

8. Handwerkzeugmaschine (10) nach einem der vorhergehenden Ansprüche,
wobei die Spindel (16) ein Spannfutter zur Befestigung des Werkzeugs umfasst, das durch Drehen in eine erste Drehrichtung geöffnet und durch Drehen in eine entgegengesetzte zweite Drehrichtung geschlossen werden kann, wobei die erste Drehrichtung entgegengesetzt zur Drehrichtung des Antriebsdrehmoments ist.

## Claims

1. A driven hand-held machine tool (10), in particular angle grinder, comprising a housing (12), a drive unit, a drivable spindle (16) to which a tool can be attached, and a spindle locking device (14), the spindle locking device (14) comprising
a driver arrangement capable of transmitting a drive torque (MEin) of the drive unit to the spindle (16) by bringing the latter into engagement with an output part connected to the spindle (16) in a rotationally fixed manner,
a support arrangement fixed to the housing, and
at least one clamping means (32),
wherein the at least one clamping means (32) is accommodated in a clamping space which is bounded radially on the outside by the driven part and radially on the inside by the support arrangement and in the circumferential direction on both sides by the driver arrangement and in which the at least one clamping means (32) is arranged, **characterized in that** the at least one clamping means (32) can be displaced within the clamping space by a relative rotation of the spindle (16) with respect to the driver arrangement to clamp the driven member against the support arrangement, and **in that** the driven member comprises an outer star (30) having, as viewed in cross-section, at least one wedge-shaped recess (34) on its inner periphery in which the at least one clamping means (32) can be at least partially received so that in this position the clamping means (32) is not in contact with the outer peripheral surface of the support arrangement bounding the clamping space radially inwardly.

2. The hand-held machine tool (10) according to claim 1,
wherein the wedge-shaped recess (34), viewed in cross-section, comprises two wedge sides (34a, 34b) which, starting from their connection point, are inclined in the direction towards the support arrangement.

3. The hand-held machine tool (10) according to one of claims 1 or 2,
wherein the driver assembly comprises at least one axially extending driver element (24) for engagement in a radial recess (36) on the output member.

4. The hand-held machine tool (10) of claim 3,
wherein said at least one driver element (24) comprises, when viewed in cross-section, a first abutment shoulder (26a) adapted to transmit drive torque (MEin) to said driven member by abutting a corresponding abutment shoulder (36a) on said radial recess (36), and wherein a finger (28) extends circumferentially from said first abutment shoulder (26a) to bound said clamping space from one side.

5. The hand-held machine tool (10) according to claim 3 or 4,
wherein the radial recess (36) is circumferentially larger than the circumferential extension of a driving portion of the driving member (24).

6. The hand tool (10) according to any one of the preceding claims,
wherein the clamping means (24) comprises a cylindrical clamping body which is circular, in particular when viewed in cross-section.

7. The hand-held machine tool (10) according to any one of the preceding claims,
wherein the support arrangement comprises a centrally arranged support pin (18).

8. The hand-held machine tool (10) according to any one of the preceding claims,
wherein the spindle (16) comprises a chuck for mounting the tool, the chuck being openable by rotation in a first rotational direction and closable by rotation in an opposite second rotational direction, the first rotational direction being opposite to the rotational direction of the drive torque.

## Revendications

1. Outil à main entraîné (10), en particulier une meuleuse d'angle, comprenant un boîtier (12), une unité d'entraînement, une broche (16) pouvant être entraînée et sur laquelle un outil peut être fixé, et un verrouillage de broche (14), le verrouillage de broche (14) présentant les caractéristiques suivantes
un dispositif d'entraînement capable de transmettre un couple d'entraînement (MEin) de l'unité d'entraînement à la broche (16) en mettant cette dernière en prise avec une partie de sortie reliée à la broche (16) de manière fixe en rotation,
un dispositif de support fixé au boîtier, et
au moins un moyen de serrage (32),
le au moins un moyen de serrage (32) étant logé dans un espace de serrage qui est délimité radialement à l'extérieur par la partie de sortie et radialement à l'intérieur par le dispositif de support et dans la direction circonférentielle des deux côtés par le dispositif d'entraînement et dans lequel le au moins un moyen de serrage (32) est disposé,
**caractérisé en ce que** le au moins un moyen de serrage (32) pouvant être déplacé à l'intérieur de l'espace de serrage par une rotation relative de la broche (16) par rapport au dispositif d'entraînement pour serrer l'élément de sortie contre l'ensemble de support, et
**en ce que** l'élément de sortie comprend une étoile externe (30) ayant, lorsqu'elle est vue en coupe transversale, au moins un évidement en forme de coin (34) sur sa périphérie interne dans lequel le au moins un moyen de serrage (32) peut être au moins partiellement reçu de sorte que dans cette position le moyen de serrage (32) n'est pas en contact avec la surface périphérique externe de l'ensemble de support limitant l'espace de serrage radialement vers l'intérieur.

2. L'outil à main (10) selon la revendication 1,
dans lequel l'évidement en forme de coin (34) comprend, vu en coupe transversale, deux côtés de coin (34a, 34b) qui sont inclinés à partir de leur point de jonction vers le dispositif de support.

3. L'outil à main (10) selon l'une quelconque des revendications 1 ou 2,
dans lequel l'ensemble d'entraînement comprend au moins un élément d'entraînement s'étendant axialement (24) pour un engagement avec un évidement radial (36) sur l'élément de sortie.

4. L'outil à main (10) selon la revendication 3,
dans lequel le au moins un élément d'entraînement (24) comprend, lorsqu'il est vu en section transversale, un premier épaulement de butée (26a) adapté pour transmettre le couple d'entraînement (MEin) à l'élément entraîné par butée contre un épaulement de butée correspondant (36a) sur l'évidement radial (36), et dans lequel un doigt (28) s'étend circonférentiellement depuis ledit premier épaulement de butée (26a) et limite l'espace de serrage depuis un côté.

5. L'outil à main (10) selon la revendication 3 ou 4,
dans lequel l'évidement radial (36) est circonférentiellement plus grand que l'extension circonférentielle d'une partie d'entraînement de l'élément d'entraînement (24).

6. L'outil à main (10) selon l'une quelconque des revendications précédentes,
dans lequel le moyen de serrage (24) comprend un corps de serrage cylindrique qui est circulaire, en particulier lorsqu'il est vu en section transversale.

7. L'outil à main (10) selon l'une quelconque des revendications précédentes,
dans lequel le dispositif de support comprend une broche de support (18) disposée de manière centrale.

8. L'outil à main (10) selon l'une quelconque des revendications précédentes,
dans lequel la broche (16) comprend un mandrin pour monter l'outil, le mandrin pouvant être ouvert par rotation dans un premier sens de rotation et fermé par rotation dans un second sens de rotation opposé, le premier sens de rotation étant opposé au sens de rotation du couple d'entraînement.
